# EUROPEAN PATENT SPECIFICATION

(11) **EP 4 381 205 B1**
(45) Date of publication and mention of the grant of the patent: **25.03.2026**
(21) Application number: 22751087.2
(22) Date of filing: 18.07.2022
(51) Int. Cl.: F16H 25/20

(54) **ACTUATOR WITH POSITION RECOGNITION**
AKTOR MIT POSITIONSERKENNUNG
ACTIONNEUR À RECONNAISSANCE DE POSITION

(30) Priority: 04.08.2021 DK PA202100786
(43) Date of publication of application: 12.06.2024
(73) Proprietor: Danfoss A/S, 6430 Nordborg (DK)
(72) Inventor: FRANCK, Martin Lynder, 6430 Nordborg (DK); PETEJAN, Igor, 6430 Nordborg (DK)
(74) Representative: Inspicos P/S
(86) International application number: PCT/EP2022/070037
(87) International publication number: WO 2023/011901

(56) References cited:
- EP-A1- 2 213 907
- WO-A1-2007/131509
- WO-A1-2009/045140
- WO-A1-2014/166509

## Description

### FIELD OF THE INVENTION

The present invention relates to an actuator, such as an actuator for regulation of a valve. The actuator according to the invention is able to recognise a position of the actuator.

### BACKGROUND OF THE INVENTION

Actuators for regulation of valves come in a plural of different shapes and forms, and include actuators powered by a driving mechanism operated by, e.g., gas pressure, hydraulic pressure or electricity. This enables the actuators, and hence the valves, to be adjusted remotely.

For some purposes it is an advantage if the actuator could be compact, thereby occupying little space in the valve, e.g. in a lengthwise direction.

It is also an advantage if the actuator could be versatile, thus adaptable to different valves. This could possibly make the production cheaper if only a single or a few versions need to be produced, these then being adaptable to different types of valves, etc.

EP 2 213 907 A1 discloses a ball screw device which is integrated with a motor. The ball screw comprises a linear-movement member, screwed with a ball screw rotary member and configured to linearly move in accordance with a relative rotation with the ball screw rotary member. The ball screw further comprises a stopper configured to collide with the housing when an amount of a relative linear movement between the ball screw rotary member and the ball screw linear-movement member becomes no less than a prescribed amount. A brake is configured to decelerate rotation of the rotor by collision of the stopper with respect to the housing.

WO 2009/045140 A1 discloses a valve actuator comprising a housing and a nut and screw arrangement. A resilient means is acting between a means being in contact with a portion of the nut and screw arrangement and the housing. A relative rotation between the threaded nut and the threaded screw leads to a translation of the means and an energizing or deenergizing of the resilient means.

### DESCRIPTION OF THE INVENTION

It is an object of embodiments of the invention to provide an actuator which is able to precisely recognise at least an end position of the actuator.

The invention provides an actuator according to claim 1 and comprising a driving device adapted to move a spindle in
a first rotatable direction and a second rotatable direction, where the spindle is connected to a nut such that when the spindle is rotated in the first or second rotatable direction, the nut is translocated in a third translational direction or in a fourth translational direction, wherein the translocation of the nut causes the nut to act on a deformable part, such that the translocation of the nut is reflected in a deformation of the deformable part,
wherein the deformable part is deformed into a hollow formed between the driving device and the deformable part, and in that the spindle reaches through the deformable part and the hollow.

The actuator of the invention may, e.g., be an actuator for regulating a valve. For instance,
the actuator may be applied for driving movement of a valve element relative to a valve seat, thereby regulating an opening degree of the valve.

The actuator comprises a driving device adapted to move a spindle in a first rotatable direction and a second rotatable direction, i.e. the driving device is adapted to rotate the spindle.

The spindle is connected to a nut in such a manner that when the spindle is rotated in the first or second rotatable direction, this causes the nut to be translocated, i.e. the nut performs translational movements in a third translational direction or a fourth translational direction. The third translational direction and the fourth translational direction may advantageously be opposite to each other.

The translocation of the nut described above causes the nut to act on a deformable part, which is thereby deformed. Thus, the translocation of the nut is reflected in the deformation of the deformable part. Accordingly, it is possible to derive the position of the nut along the third or fourth translational direction from the deformation of the deformable part. In particular, it is possible to derive whether or not the actuator is in an end position which causes the nut to act on the deformable part, based on whether or not deformation of the deformable part is detected.

When the nut acts on the deformable part as described above, the deformable part is deformed into a hollow which is formed or defined between the driving device and the deformable part. Thus, a portion of the deformable part is moved into or received in the hollow, as a result of the deformation of the deformable part caused by the movement of the nut.

The spindle reaches through the deformable part and the hollow. This could, e.g., be obtained by providing the deformable part with an opening, through which the spindle extends. This ensures that the translational movements of the nut, which cause the deformation of the deformable part, are well defined, and that there is a well defined correspondence between the position of the nut and the deformations of the deformable part. Accordingly, the position of the nut, and thereby of the actuator, can be derived with high accuracy from the deformation of the deformable part.

The first and second rotatable directions may be perpendicular to the third and fourth translational directions. According to this embodiment, the rotational movements of the spindle may take place about a rotational axis which is arranged parallel to the third and fourth translational directions. The rotational axis may, e.g., coincide with a longitudinal direction defined by the spindle.

The first rotational direction of the spindle may be a clockwise direction and the second rotational direction of the spindle may be an anticlockwise direction.

According to this embodiment, the first and second rotational directions represent respective opposite rotations about a suitable rotational axis, e.g. a rotational axis coinciding with a longitudinal direction defined by the spindle.

The spindle and the nut may be in threaded connection such that a clockwise rotation of the spindle translocates the nut in the third direction, and an anticlockwise rotation of the spindle translocates the nut in the fourth direction.

According to this embodiment, the spindle and the nut may be connected to each other via a threaded connection formed by an outer thread on the spindle and an inner thread on the nut. The nut may be locked against rotational movements, but allowed to perform translational movements relative to the spindle, along a longitudinal direction defined by the spindle. Thereby, when the spindle is rotated, the nut is not allowed to rotate along, but the threaded connection will cause the nut to move translationally relative to the spindle. Accordingly, the threaded connection ensures that the rotational movement of the spindle is transformed into a translational movement of the nut. More particularly, the threaded connection ensures that rotational movements of the spindle in the first, i.e. the clockwise, direction causes the nut to move translationally in the third direction, while rotational movements of the spindle in the second, i.e. the anticlockwise, direction causes the nut to move translationally in the opposite direction, i.e. in the fourth direction.

The deformable part may extend in a plane parallel to the first and second rotational directions. According to this embodiment, the rotational movements of the spindle take place about a rotational axis which extends substantially normal to a plane defined by a surface of the deformable part. Thereby the resulting translational movements of the nut will take place along a direction which has a component being normal to the plane defined by the surface of the deformable part. Accordingly, when the nut moves as described above, it pushes against the deformable part along this normal direction, thereby causing a well defined deformation of the deformable part.

A plural of deformable projections may be distributed within the nut along a line parallel to the third and fourth translational directions, and each deformable projection may be adapted to obstruct a part of the spindle when passing a projection during the translocation of the nut, thus increasing the power required by the driving device to cause the rotatable movement of the spindle.

According to this embodiment, an inner part of the nut is provided with a number of deformable projections, distributed along the nut in the direction along which the nut translocates, i.e. along the third and fourth translational directions. Furthermore, the spindle is provided with a part which may be obstructed by the projections of the nut, e.g. in the form of a widened part of the spindle. When the nut translocates relative to the spindle, this causes relative movements between the projections of the nut and the widened part of the spindle. When a projection and the widened part of the spindle are arranged at a coinciding position, engagement between the projection and the widened part will obstruct further relative movement between the nut and the spindle. This represents an additional force which the driving device needs to overcome in order to rotate the spindle and thereby cause the nut to translocate further. Overcoming this additional force requires additional power from the driving device. When it is detected that such an additional power from the driving device is required, it may be concluded that the position of the nut corresponds to the position which results in the positions of a projection and the widened part being coinciding. Thus, such information may be applied for determining the position of the nut, and thereby of the actuator.

Accordingly, the projections may be used in an estimation of the position of the nut.

The actuator is in data exchange communication with a controller, and a deformation characteristic of the deformable part is stored in the controller, the controller is adapted to detect an operating parameter of the driving device, and to estimate a position of the nut, based on the detected operating parameter and the stored deformation characteristic.

Thus, the position of the nut, and thereby of the actuator, is derived from the deformation of the deformable part, based on a known deformation characteristic of the deformable part, and based on a relevant operating parameter of the driving device which is related to the deformation characteristic.

The operating parameter may be a driving voltage or driving current of the driving device.

When the translational movements of the nut cause the deformable part to deform, this represents a force which is directed opposite to the translational movement of the nut. Thereby, in order to move the nut, more power is required by the driving device. This will result in a higher driving voltage and/or a higher driving current of the driving device. Therefore, the driving voltage or the driving current provides information regarding whether or not the nut is in an end position where the movements of the nut cause deformation of the deformable part. For instance, if the driving voltage or the driving current of the driving device exceeds a certain threshold value, this may be an indication that the actuator has reached an end position, and that it should therefore not be moved further.

The driving device may be a motor, such as an electromotor.

### BRIEF DESCRIPTION OF THE DRAWINGS

The invention will now be described in further detail with reference to the accompanying drawings in which
Figs. 1 and 2 are cross sectional views of an actuator according to an embodiment of the invention,
Fig. 3 illustrates driving power of a driving device of an actuator according to an embodiment of the invention as a function of position of the actuator,
Fig. 4 illustrates driving current of a driving device of an actuator according to an embodiment of the invention as a function of position of the actuator,
Fig. 5 illustrates part of a nut and a spindle of an actuator according to an alternative embodiment of the invention, and
Figs. 6 illustrates driving power of a driving device of an actuator according to the embodiment of Fig. 5 as a function of position of the actuator.

### DETAILED DESCRIPTION OF THE DRAWINGS

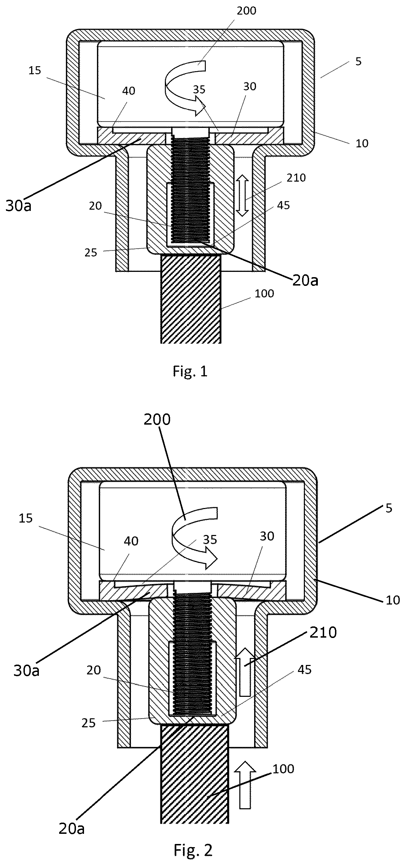

Fig. 1 illustrates an actuator 5 comprising a driving device 15 adapted move a spindle 20 in first and second directions 200. The driving device 15 could be an electric motor, air motor, pneumatic actuator, electroactive actuator, or any other suitable device 15 suitable to move the spindle 20.

In the illustration the spindle 20 is connected to a nut 25 such that a movement of the spindle 20 in the respective first or second direction 200 translocates the nut 25 in a third or fourth direction 210. In one embodiment the spindle 20 and nut 25 are in a threaded connection, and the first and second directions 200 are rotations about a lengthwise axis relative to the spindle 20, such as in respectively a clockwise and an anticlockwise direction. In this embodiment, when the spindle 20 rotates, the threaded connections translocate the nut 25 in a lengthwise direction along the spindle 20, such as up and down, depending on the direction of rotation of the spindle 20. This translocation along the spindle 20 is then the respective third and fourth directions 210.

It could, e.g., be such that a clockwise rotation of the spindle 20 translocates the nut 25 in the third direction, while an anticlockwise rotation of the spindle 20 translocates the nut 25 in the fourth direction - or vice versa.

In an embodiment the first and second directions of movement 200 are perpendicular to the third and fourth directions 210. This is, for example, the case when the first and second directions 200 are rotations about a lengthwise axis relative to the spindle 20, and the third and fourth directions 210 are lengthwise directions along the spindle 20.

A deformable part 30 is positioned such that it is being reshaped or deformed under the movement of the spindle 20 and the nut 25. The illustrated embodiment shows the deformable part 30 positioned in contact with the nut 25, such that the position of the nut 25 defines the shape, or deformation, of the deformable part 30.

The deformable part 30 may be formed of a bendable element, spring element, or any material or shape that has a basic shape, but which is adapted to deform, or change shape, when acted on by a force. In the present context, the deforming could be a bending when being pushed on, a compression (e.g. of a spring), such as when squeezed between two parts. In the following example the deformation is a bending, but this could, e.g., be replaced by a spring being squeezed, etc.

The deformable part 30 may then be positioned such that it has the basic shape at an endpoint position of spindle 20 and/or nut 25, e.g. corresponding to a fully open or closed position of a valve connected to the actuator 5.

The embodiment shows a section and one end part 20a of the spindle 20 positioned inside the nut 25. The inside of the nut 25 defines an endpoint 45 for the one end part 20a of the spindle 20, such as by the nut 25 being closed at this end. When the spindle 20 moves in the first or second 200 directions, such as by a rotation, its position within the nut 25 will change by the translocation in the third and fourth directions 210. When the end part 20a reaches the endpoint 45, it cannot translocate any further without risking damage to the nut 25. Possibly, the driving device 15 could be damaged, due to the high encountered resistance.

The nut 25 at one end is formed with a threaded opening adapted for the spindle 20 to contact and reach into the inner of the nut 25, the inner formed with a hollow, which hollow could be threaded too and in contact with the spindle 20, or as illustrated, formed such that there is no contact between the spindle 20 and the inner sides of the hollow. This threaded opening may be positioned at the opposite end of the nut 25 relative to the endpoint 45.

The deformable part 30 may be positioned in contact to one of the outer end surfaces of the nut 25, such as at the end with the threaded opening. Alternatively, it could be positioned to contact the end of the nut 25 with the endpoint 45, possible also being the end to contact a valve or a part of a valve, such as a movable valve stem. Alternatively or additionally, the nut 25 may be provided with a projection somewhere along the outer side of the nut 25, which could be brought into contact with the deformable part 30.

Taking the illustration as example, the deformable part 30 is positioned between the nut 25 and the driving device 15. When between the surfaces of other parts, such as the nut 25 and driving device 15, the deformable part 30 may need space for the deformation, or reshaping. To this purpose a hollow 35 is formed between the deformable part 30 and one of the surfaces, such as between the driving device 15 and deformable part 30 as the illustrated embodiment.

The hollow 35 may be formed by inserting at least one separation element 40 sandwiched between two stationary elements of the actuator 5, such as the driving device 15 and an actuator housing 10, or some other inserted stationary features within the housing 10. The separation element(s) 40 may be arranged circumferentially with respect to a deformable area 30a of the deformable part 30, the deformable area 30a being the part of the deformable part 30 contacting, e.g., the nut 25. The separation element(s) 40 may have a larger width than the deformable area 30a and positioned such that, when the deformable part 30 is in its basic shape, it is kept at a distance to, e.g., the driving device 15, this distance forming the hollow 35.

In the illustrated embodiment the separation element 40 is an integral projection 40 of the deformable part 30, such as at its circumference. In an alternative embodiment the edge of the deformable element 30 may be sandwiched between, e.g., the housing 10 and the separation element 40.

The deformable part 30 may, e.g., be disc shaped and positioned in the actuator 5 to extend in a plane parallel to the first and second directions 200.

The spindle 20 may reach through the deformable part 30 and the hollow 35, and the deformable area 30a, thus, may be formed with an opening for the spindle 20. The opening may be of a size such that the inner edge circumference of the opening does not contact the spindle 20. In an alternative embodiment, the opening may be in threaded connection to the spindle 20, such that the movement of the spindle 20 in the first and second directions 200 deforms the deformable area 30a of the deformable part 30, instead of the nut 25.

Fig. 1 shows the nut 25 contacting an inner section of the deformable area 30a, such as the inner edge circumference of the opening for the spindle 20, but where no deforming force acts on the deformable part 30, such that it is in its basic form.

Fig. 1 shows the nut 25 contacting a valve stem 100 of a valve, such that a translocation of the nut 25 in a third or second direction 210 correspondingly translocates the valve stem 100 to change the position of a valve element, and thereby changing a valve opening.

Fig. 2 is an illustration of the same actuator 5 as in Fig. 1, but where the nut 25 is translocated further towards the deformable part 30, thereby deforming the deformable area 30a of the deformable part 30 into the hollow 35.

The deformation, or reshaping, of the deformable area 30a is seen as a bending as it is being pushed by the nut 25.

The use of the deformable part 30 includes to identify at least when the spindle 20 is at an end position, such as illustrated when the one end part 20a is in contact with or close to the endpoint 45.

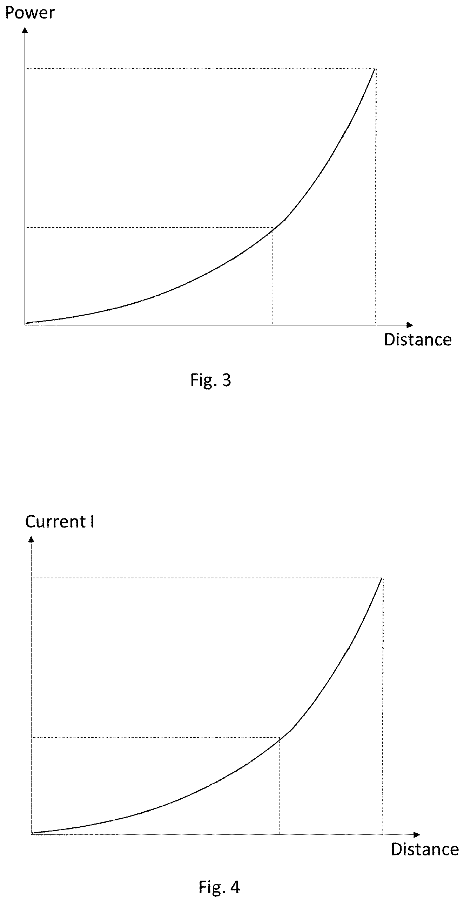

Since it requires additional power of the driving device 15 to deform the deformable part 30 compared to if no such deformable part 30 was present, it is possible to estimate the deformation. This is due to this power will increase as a function of the deformation, e.g. bending, the relation not being linear. This is illustrated in Fig. 3, illustrating a curve of the power P required to move the nut 25 a distance D due to the increasing deformation/bending of the deformable part 30. Such a relation like the deformation characteristics can be stored in, e.g., a data storage of a processor in, e.g., a controller of the actuator 5, or in the actuator 5 itself. When a given power consumption P is measured, and once a given threshold power consumption is reached, the system will identify this as the spindle 20 having reached or being near the endpoint 45, and stop any further movement in this direction.

Fig. 4 shows an alternative where the current I relation to the traveling distance D is stored in the processor data storage, and where the current I induced to the driving device 15 is measured, and when reaching a given threshold current, the system will identify this as the spindle 20 having reached or being near the endpoint 45, and stop any further movement in this direction.

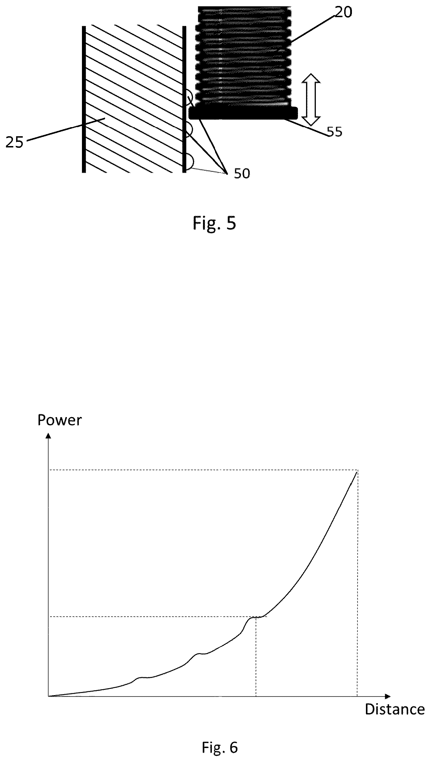

Fig. 5 shows an embodiment that could be used to improve the position identification of the nut 25. The basic idea is to include a plural of obstructions on the path the nut 25. The shown embodiment introduces projections 50 formed in the inner side wall of the nut 25 hollow.

The spindle 20 may be formed with a widened part 55 adapted to engage with the individual projections 50 as they pass each other.

Either the projections 50 and/or the possible widened part 55 may be resilient to an extent which allows them to, e.g., be compressed slightly. If, e.g., the projections 50 are resilient, when a projection 50 and the spindle 20 pass each other, possibly contacted by the widening part 55, the resilient part offers an additional resistance. The passing is possible due to the resilience, the resilient part being slightly compressed. The driving device 15 thus needs to use some extra power in order to force the projection 50 past the spindle 20 or vice versa, depending on whether the point of view is from the spindle 20 or from the nut 25.

Fig. 6 illustrates how this additional resistance induces small increases, or projections, in the relation curve of power consumption P to the travel distance D. The system, e.g. the processor, then can be adapted to 'count' the number of projections 50 being crossed by the spindle 20, which then can be used to 'calibrate' the position recognition of the nut 25 relative to the spindle 20, corresponding to the travel distance D.

The present invention is related to the functioning of the deformable part 30 to estimate, e.g., an endpoint position, such as the endpoint 45 within the nut 25, and/or in general to estimate a position. The nut 25 and its cooperation with the spindle 20 may be operated differently, e.g. the spindle 20 may be moving in a translocation first and second direction 200, possible being parallel to the third and fourth directions 210.

## Claims

1. Actuator (5) comprising a driving device (15) adapted to move a spindle (20) in a first rotatable direction (200) and a second rotatable direction (200), where the spindle (20) is connected to a nut (25) such that when the spindle (20) is rotated in the first or second rotatable direction (200), the nut (25) is translocated in a third translational direction (210) or in a fourth translational direction (210), wherein the translocation of the nut (25) causes the nut (25) to act on a deformable part (30), such that the translocation of the nut (25) is reflected in a deformation of the deformable part (30),
wherein the deformable part (30) is deformed into a hollow (35) formed between the driving device (15) and the deformable part (30), and in that the spindle (20) reaches through the deformable part (30) and the hollow (35),
**characterized in that** the actuator (5) is in data exchange communication with a controller, and **in that** a deformation characteristic of the deformable part (30) is stored in the controller, the controller being adapted to detect an operating parameter of the driving device (15), and to estimate a position of the nut (25), based on the detected operating parameter and the stored deformation characteristic.

2. Actuator (5) according to claim 1, wherein the first and second rotatable directions (200) are perpendicular to the third and fourth translational directions (210).

3. Actuator (5) according to claim 1 or 2, where the first rotational direction of the spindle (20) is a clockwise direction (200) and the second rotational direction (200) of the spindle (20) is an anticlockwise direction.

4. Actuator (5) according to claim 3, wherein the spindle (20) and the nut (25) are in threaded connection such that a clockwise rotation of the spindle (20) translocates the nut (25) in the third direction, and where an anticlockwise rotation of the spindle (20) translocates the nut (25) in the fourth direction.

5. Actuator (5) according to any of the preceding claims, wherein the deformable part (30) extends in a plane parallel to the first and second rotational directions (200).

6. Actuator (5) according to any of the preceding claims, wherein a plural of deformable projections (50) are distributed within the nut (25) along a line parallel to the third and fourth translational directions (210), each deformable projection (50) being adapted to obstruct a part (55) of the spindle (20) when passing a projection (50) during the translocation of the nut (25), thus increasing the power required by the driving device (15) to cause the rotatable movement of the spindle (20).

7. Actuator (5) according to claim 6, wherein the projections (50) are used in an estimation of the position of the nut (25).

8. Actuator according to any of the preceding claims, wherein the operating parameter is a driving voltage or driving current of the driving device (15).

9. Actuator according to any of the preceding claims, wherein the driving device (15) is a motor.

## Patentansprüche

1. Aktuator (5), der eine Antriebsvorrichtung (15) umfasst, die dazu ausgelegt ist, eine Spindel (20) in einer ersten Drehrichtung (200) und einer zweiten Drehrichtung (200) zu bewegen, wobei die Spindel (20) so mit einer Mutter (25) verbunden ist, dass, wenn die Spindel (20) in der ersten oder zweiten Drehrichtung (200) gedreht wird, die Mutter (25) in einer dritten Translationsrichtung (210) oder in einer vierten Translationsrichtung (210) verlagert wird, wobei die Verlagerung der Mutter (25) bewirkt, dass die Mutter (25) so auf ein verformbares Teil (30) wirkt, dass sich die Verlagerung der Mutter (25) in einer Verformung des verformbaren Teils (30) widerspiegelt,
wobei das verformbare Teil (30) in einen zwischen der Antriebsvorrichtung (15) und dem verformbaren Teil (30) gebildete Hohlraum (35) verformt wird, und dadurch, dass die Spindel (20) durch das verformbare Teil (30) und den Hohlraum (35) reicht,
**dadurch gekennzeichnet, dass** der Aktuator (5) in Datenaustauschkommunikation mit einer Steuerung steht, und dadurch, dass eine Verformungscharakteristik des verformbaren Teils (30) in der Steuerung gespeichert ist, wobei die Steuerung dazu ausgelegt ist, einen Betriebsparameter der Antriebsvorrichtung (15) zu detektieren und eine Position der Mutter (25) basierend auf dem detektierten Betriebsparameter und der gespeicherten Verformungscharakteristik zu schätzen.

2. Aktuator (5) nach Anspruch 1, wobei die erste und die zweite Drehrichtung (200) senkrecht zu der dritten und der vierten Translationsrichtung (210) sind.

3. Aktuator (5) nach Anspruch 1 oder 2, wobei die erste Drehrichtung der Spindel (20) eine Richtung im Uhrzeigersinn (200) ist und die zweite Drehrichtung (200) der Spindel (20) eine Richtung gegen den Uhrzeigersinn ist.

4. Aktuator (5) nach Anspruch 3, wobei die Spindel (20) und die Mutter (25) so in Gewindeverbindung stehen, dass eine Drehung der Spindel (20) im Uhrzeigersinn die Mutter (25) in der dritten Richtung verlagert, und wobei eine Drehung der Spindel (20) gegen den Uhrzeigersinn die Mutter (25) in der vierten Richtung verlagert.

5. Aktuator (5) nach einem der vorhergehenden Ansprüche, wobei sich das verformbare Teil (30) in einer Ebene parallel zu der ersten und der zweiten Drehrichtung (200) erstreckt.

6. Aktuator (5) nach einem der vorhergehenden Ansprüche, wobei mehrere verformbare Vorsprünge (50) innerhalb der Mutter (25) entlang einer Linie parallel zu der dritten und der vierten Translationsrichtung (210) verteilt sind, wobei jeder verformbare Vorsprung (50) dazu ausgelegt ist, einen Teil (55) der Spindel (20) beim Passieren eines Vorsprungs (50) während der Verlagerung der Mutter (25) zu blockieren, wodurch die Leistung erhöht wird, die durch die Antriebsvorrichtung (15) benötigt wird, um die Drehbewegung der Spindel (20) zu bewirken.

7. Aktuator (5) nach Anspruch 6, wobei die Vorsprünge (50) bei einer Schätzung der Position der Mutter (25) verwendet werden.

8. Aktuator nach einem der vorhergehenden Ansprüche, wobei der Betriebsparameter eine Antriebsspannung oder ein Antriebsstrom der Antriebsvorrichtung (15) ist.

9. Aktuator nach einem der vorhergehenden Ansprüche, wobei die Antriebsvorrichtung (15) ein Motor ist.

## Revendications

1. Actionneur (5) comprenant un dispositif d'entraînement (15) conçu pour déplacer une broche (20) dans un premier sens de rotation (200) et un deuxième sens de rotation (200), la broche (20) étant reliée à un écrou (25) de sorte que lorsque la broche (20) tourne dans le premier ou le second sens de rotation (200), l'écrou (25) soit déplacé dans un troisième sens de translation (210) ou dans un quatrième sens de translation (210), le déplacement de l'écrou (25) amenant l'écrou (25) à agir sur une partie déformable (30), de sorte que le déplacement de l'écrou (25) se traduise par une déformation de la partie déformable (30),
la partie déformable (30) étant déformée en un creux (35) formé entre le dispositif d'entraînement (15) et la partie déformable (30), et la broche (20) passant à travers la partie déformable (30) et le creux (35),
**caractérisé en ce que** l'actionneur (5) est en communication d'échange de données avec un dispositif de commande, et **en ce qu'**une caractéristique de déformation de la partie déformable (30) est stockée dans le dispositif de commande, le dispositif de commande étant conçu pour détecter un paramètre de fonctionnement du dispositif d'entraînement (15), et pour estimer une position de l'écrou (25), sur la base du paramètre de fonctionnement détecté et de la caractéristique de déformation stockée.

2. Actionneur (5) selon la revendication 1, les premier et deuxième sens de rotation (200) étant perpendiculaires aux troisième et quatrième sens de translation (210).

3. Actionneur (5) selon la revendication 1 ou 2, le premier sens de rotation de la broche (20) étant un sens horaire (200) et le deuxième sens de rotation (200) de la broche (20) étant un sens antihoraire.

4. Actionneur (5) selon la revendication 3, la broche (20) et l'écrou (25) étant en liaison filetée de sorte qu'une rotation dans le sens horaire de la broche (20) déplace l'écrou (25) dans le troisième sens, et qu'une rotation dans le sens antihoraire de la broche (20) déplace l'écrou (25) dans le quatrième sens.

5. Actionneur (5) selon l'une quelconque des revendications précédentes, la partie déformable (30) s'étendant dans un plan parallèle aux premier et deuxième sens de rotation (200).

6. Actionneur (5) selon l'une quelconque des revendications précédentes, une pluralité de saillies déformables (50) étant réparties dans l'écrou (25) le long d'une ligne parallèle aux troisième et quatrième sens de translation (210), chaque saillie déformable (50) étant conçue pour obstruer une partie (55) de la broche (20) lors du passage d'une saillie (50) pendant le déplacement de l'écrou (25), augmentant ainsi la puissance requise par le dispositif d'entraînement (15) pour provoquer le mouvement rotatif de la broche (20).

7. Actionneur (5) selon la revendication 6, les saillies (50) étant utilisées dans une estimation de la position de l'écrou (25).

8. Actionneur selon l'une quelconque des revendications précédentes, le paramètre de fonctionnement étant une tension d'entraînement ou un courant d'entraînement du dispositif d'entraînement (15).

9. Actionneur selon l'une quelconque des revendications précédentes, le dispositif d'entraînement (15) étant un moteur.
